# EUROPÄISCHE PATENTSCHRIFT

(11) **EP 0 932 584 B1**
(45) Veröffentlichungstag und Bekanntmachung des Hinweises auf die Patenterteilung: **07.06.2000**
(21) Anmeldenummer: 97911203.4
(22) Anmeldetag: 09.10.1997
(51) Int. Cl.: C03B 23/025, C03B 23/033

(54) **BIEGEVORRICHTUNG FÜR AUF ERWEICHUNGSTEMPERATUR ERWÄRMTE GLASSCHEIBEN**
FOLDING DEVICE FOR GLASS SHEETS HEATED AT SOFTENING TEMPERATURE
DISPOSITIF DE PLIAGE POUR PLAQUES DE VERRE CHAUFFEES A UNE TEMPERATURE DE RAMOLLISSEMENT

(30) Priorität: 17.10.1996 DE 19642876
(43) Veröffentlichungstag der Anmeldung: 04.08.1999
(73) Patentinhaber: Ingenieurgemeinschaft WSP, 52074 Aachen (DE)
(72) Erfinder: KRAMER, Carl, D-52076 Aachen (DE); STENGEL, Jürgen, D-52072 Aachen (DE)
(74) Vertreter: Marx, Lothar, Dr.
(86) Internationale Anmeldenummer: EP9705566
(87) Internationale Veröffentlichungsnummer: WO9817594

(56) Entgegenhaltungen:
- EP-A- 0 440 884
- EP-A- 0 555 079
- EP-A- 0 634 371
- WO-A-93/00305
- US-A- 3 545 951

## Beschreibung

Die Erfindung betrifft eine Vorrichtung zum Wölben von auf Erweichungstemperatur erwärmten Glasscheiben nach dem Oberbegriff des Anspruches 1. Biegevorrichtungen ähnlich dieser Gattung sind zum Beispiel aus DE-C-40 03 828 bekannt. Die in einem Rollenherd auf Erweichungstemperatur erwärmte plane Glasscheibe wird im planen Zustand auf einem Rollenherd, der aus geraden Transportrollen besteht, in die Biegevorrichtung gefördert. Der Biegevorgang wird dann dadurch vollzogen, daß der Rollengang aus geraden Transportstäben sich zwischen die Rollen eines Rollengangs aus gebogenen Transportrollen absenkt, wobei die gebogenen Rollen in ihrer Biegeform der zu erzielenden Biegekontur entsprechen (EP-A-0 114 168) oder, daß die den geraden Rollenherd bildenden Transportstäbe nach Einlaufen der Scheibe in den Biegebereich nach unten (DE-C-40 03 828) zwischen die das Formbett bildenden gebogenen Transportrollen schwenken oder die Form bildende Transportstäbe von unten nach oben aus dem Rollenherd mit geraden Transportstäben herausgeschwenkt werden, Eine Biegevorrichtung nach dem Oberbegriff des Anspruchs 1 ist aus der US-A-5 201 928 bekannt.

Allen diesen Vorrichtungen ist gemeinsam, daß bei der Verformung der Glasscheibe eine Relativbewegung der Glasscheibe in axialer Richtung der Transport- oder Formstäbe auftritt, da diese während des Biegevorganges ihre Lage relativ zur Scheibe verändern. Die Folge sind Oberflächenbeschädigungen der Glasscheibe, Minderungen der optischen Qualität und eine vergleichsweise geringe Standzeit der Ummantelungen von Biege- und Transportrollen, welche zur Vermeidung noch größerer Beschädigungen der Oberfläche der Glasscheibe erforderlich sind. Ein weiterer Nachteil der bekannten Verfahren ist noch, daß die Scheibe während des Biegevorgangs - über die Scheibenbreite betrachtet - nur in kleinen Bereichen aufliegt. So wird zum Beispiel bei den Vorrichtungen nach DE-C-40 03 828 die Scheibe zunächst nur auf den Kanten geführt. Das gesamte Gewicht der Scheibe muß folglich auch auf den Kanten aufliegen. Die Folgen sind eine hohe Beanspruchung der Kanten und eine störende Welligkeit, die ihre Ursache darin hat, daß im ersten Moment des Wegschwenkens oder Absenkens des geraden Rollenherdes die Scheibe zwischen den sie stützenden Rollen durchsackt. Nachteilig ist ferner, daß mit dieser Art Vorrichtungen, dann, wenn stärkere Biegungen erzielt werden müssen, nur Scheiben mit parallelen Seitenkanten verarbeitet werden können. Bei Scheiben mit nicht parallelen Seitenkanten führt nämlich die verhältnismäßig große Reibung der Scheibe gegen Verschiebung auf den Transport- bzw. Biegerollen in axialer Richtung wegen der unterschiedlichen Auflagenbreite in der Regel zu einer Drehung der Scheibe um eine Achse senkrecht zur Transportebene. Dadurch kommt es zu Winkelabweichungen zwischen der Scheibenachse und der Achse des Biegezylinders, welcher der gebogenen Kontur einbeschrieben ist. Die Folge sind unzulässig hohe Geometrietoleranzen.

Dieser Fehler, der bei Scheiben mit nicht parallelen Seitenkanten besonders krass ist, tritt auch bei Scheiben mit parallelen Kanten auf, weil die Schubkraft, bei welcher die Scheibe die Haftreibung überwindet und die Relativbewegung in Richtung der Rollenachse beginnt, wie alle Vorgänge bei Reibungsbeteiligung, gewissen unvermeidlichen Schwankungen unterworfen ist.

All diese Nachteile werden bei der Vorrichtung nach der Erfindung vermieden, weil beim Biegevorgang keine Relativbewegung in Achsrichtung zwischen der Scheibe und den Biegerollen auftritt, welche durch ihre Bewegung die Biegeform erzeugen. Erfindungsgemäß wird dies dadurch erreicht, daß die Scheibe, welche auf geraden Transportrollen eines festen Rollenherdes in den Biegebereich einläuft, während des Biegevorganges von Biegerollen gefördert wird, welche im Ausgangszustand zwischen den festen Rollen liegen bevorzugterweise, etwa bis zu deren Mitte reichen, und so angebracht und bewegbar sind, daß sie während des Biegevorgangs - im Querschnitt der Vorrichtung und der zu biegenden Scheibe betrachtet - auf der gewünschten Biegekontur abrollen. Bei diesem Abrollvorgang ist eine Relativbewegung zwischen Glasoberfläche und Biegerolle in deren Achsrichtung aus kinematischen Gründen ausgeschlossen. Die Scheibe liegt während des Biegevorganges völlig mit ihrem noch nicht gebogenen Teil auf den durch ihre Bewegung den Biegevorgang bewirkenden Förderrollen auf, so daß im Gegensatz zu den bekannten Vorrichtungen die Auflage zunächst vollflächig ist und erst am Ende des Biegevorganges, wenn die Scheibe durch die Biegeform schon eine gute Führung in Längsrichtung erhalten hat, sich die Auflagefläche verringert.

Die beschriebene erfindungsgemäße Vorrichtung hat noch den Vorteil, daß ein Rollenkörper, welcher der Biegeform entspricht, oberhalb des geraden Transportrollentisches angeordnet werden kann, so daß die Scheibe durch die Abrollbewegung, durch welche die Biegung erfolgt, gegen diese Form gedrückt wird. Auch beim Kontakt mit den Rollen dieses Formkörpers kommt es auch aus kinematischen Gründen nicht zu einer Relativbewegung in Richtung der Rollenachsen. Bei der erfindungsgemäßen Vorrichtung ist also die Reibung zwischen der Ummantelung der die Scheibe führenden bzw. verformenden Rollen und der Scheibe im Gegensatz zu den bekannten Rollenbiegevorrichtungen von Vorteil, da sie die Lage der Scheibe während des Biegevorganges fixiert.

Bei besonderen Anforderungen an die zu biegende Glasscheibe, wie z.B. besondere Schonung einer mit Siebdruck versehenen oder beschichteten Oberfläche ist es gemäß einer bevorzugten Ausführung möglich, den Formkörper während des Biegevorganges mit gleicher Geschwindigkeit wie die Scheiben zu bewegen, so daß zwischen dem Formkörper und der zu biegenden Scheibe während des Biegevorganges keine Relativbewegung auftritt. Hierzu wird der Formkörper im oberen Teil der Vorrichtung z.B. in Schienen geführt und mittels eines mit der Transportbewegung synchronisierten Antriebes bewegt. Zur Ausschaltung von Massenträgheitseffekten empfielt es sich, die Bewegung des Formkörpers bereits einzuleiten, bevor dieser auf der Scheibe umgesetzt wird. Umgekehrt wird am Ende des Biegevorganges der Formkörper erst abgebremst, nachdem er von der fertig gebogenen Scheibe abgehoben wurde. Zu diesem Zweck muß der Formkörper mit entsprechenden Stellelementen zur Ausführung der Absenk- und Anhebbewegung ausgerüstet sein, welche mit der Einrichtung zur Bewegung des Formkörpers in Transportrichtung der Scheibe synchronisiert sind.

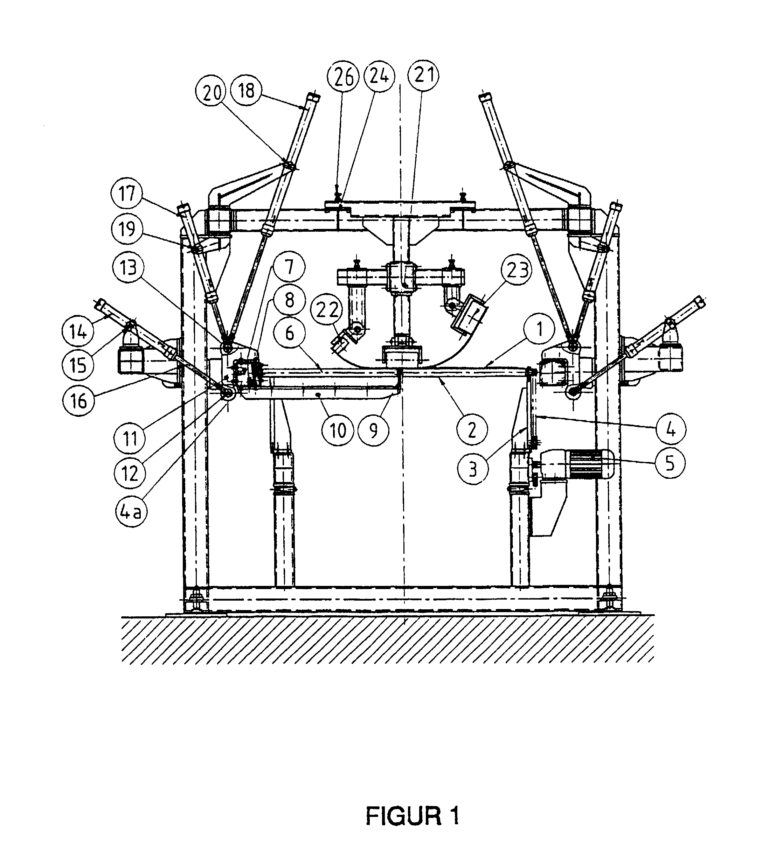

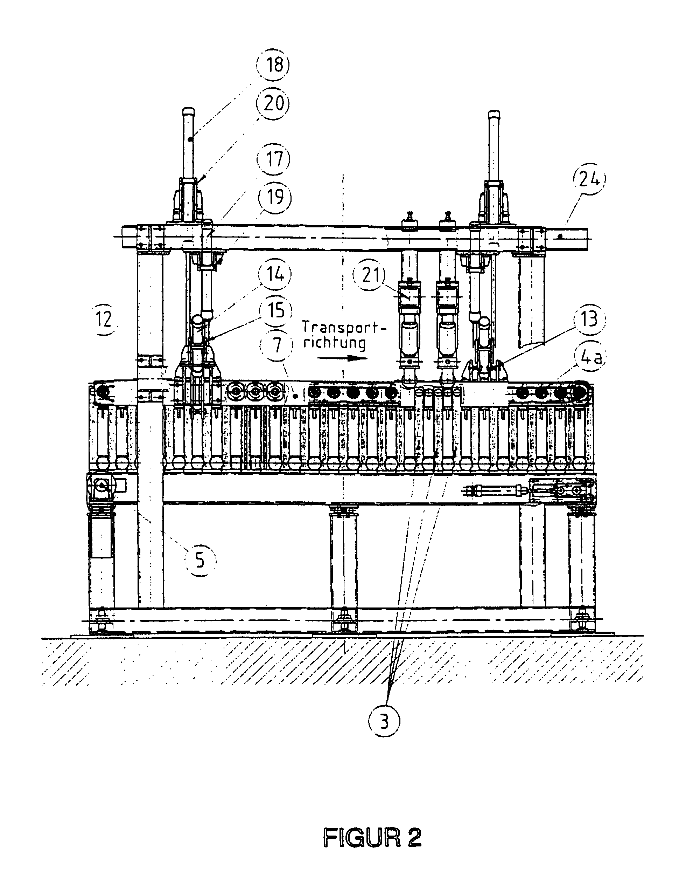

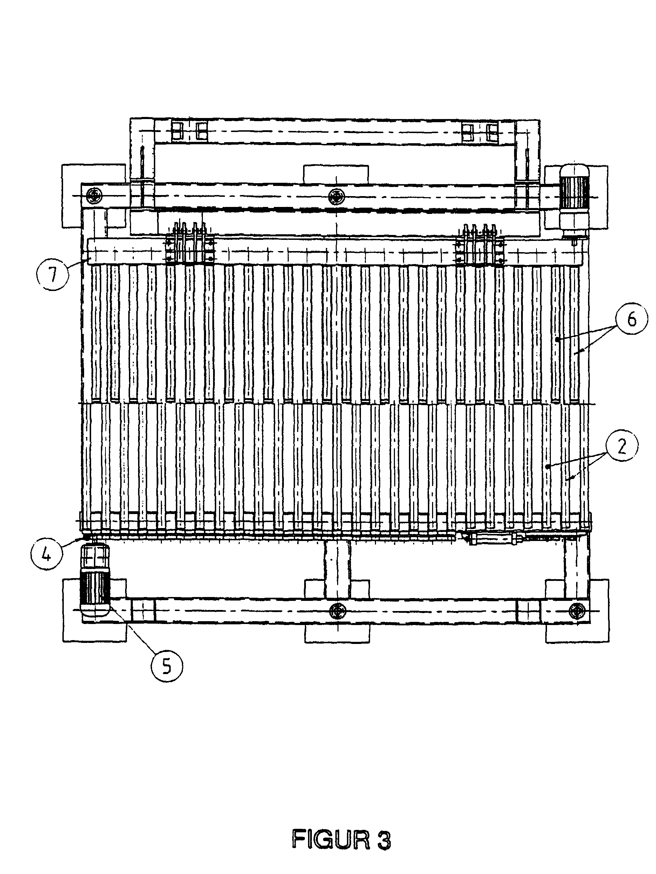

Die erfindungsgemäße Vorrichtung wird im folgenden anhand eines typischen Ausführungsbeispiels einer Vorrichtung zur Fertigung gebogener Scheiben aus dem Architektur- und Einrichtungsbereich beschrieben. Zur Erläuterung der Beschreibung dienen die Figuren 1 bis 4. Es zeigen
- Figur 1: einen Querschnitt der Vorrichtung mit Formkörper,
- Figur 2: einen Längsschnitt, bei welchem zur besseren Übersicht nur das Oberteil des Formkörpers angedeutet ist und die Biegerollen sich in verschwenkter Stellung befinden,
- Figur 3: eine Draufsicht in deren oberer Hälfte die Biegerollen und in deren unterer Hälfte die geraden Transportrollen des festen Rollenganges dargestellt sind, und
- Figur 4: eine Vorrichtung, in welcher der Formkörper während des Biegevorganges mit der zu biegenden Scheibe mitbewegt und auf diese aufgesetzt werden kann,
der erfindungsgemäßen Vorrichtung.

Eine Glasscheibe 1 wird auf einem feststehenden Rollenherd aus geraden Rollen 2 in den Biegebereich gefördert. Diese Transportrollen sind auf kammartigen Lagerstützen 3 verlagert. Der Antrieb erfolgt über einen Riemen- oder Kettentrieb 4 mittels eines Getriebemotors 5. Zwischen den geraden Transportrollen 2 sind von beiden Seiten etwa bis zur Mitte der geraden Rollen 2 reichende gerade Biegerollen 6 angeordnet. Diese Biegerollen 6 sind an den beiden Seiten des durch die Rollen 2 gebildeten Rollenherdes in Lagerbalken 7 und an ihrem anderen Ende auf Lagerstützen 9 verlagert, die ihrerseits auf dem mit dem Lagerbalken 7 biegesteif verbundenen Kragbalken 10, welcher sich unterhalb der Rollen 6 befindet, abgestützt sind. Im Inneren des vorteilhaft als Hohlprofil ausgebildeten Lagerbalkens 7 ist ein Riemen- oder Kettentrieb 4a zum Antrieb der Biegerollen vorgesehen. Der Lagerbalken 7 ist über seine Länge an mindestens zwei Stellen mit Lagerplatten 11 verbunden. Diese Lagerplatten 11 weisen zwei Gelenkpunkte 12 und 13 auf, wobei am unteren Gelenkpunkt 12 ein Hydraulikzylinder 14 angreift, der seinerseits wieder in einem Gelenkpunkt 15 drehbar verlagert ist, so daß bei Verschiebung der Kolbenstange 16 eine Drehbewegung des Zylinders 14 um diesen Drehpunkt 15 auftreten kann. In ähnlicher Weise wirken auf den Drehpunkt 13 zwei Zylinder 17 und 18, die ebenso wie der Zylinder 14 in den Drehpunkten 19 und 20 verlagert sind. Durch diese Art der Aufhängung ist die Lagerplatte 11 und mit ihr der Lagerbalken 7 mit den Biegerollen 6 statisch bestimmt gelagert. Mit den Zylindern ist eine Bewegung der Rollen möglich, die im Auslegungsbereich der Vorrichtung, was zu erzielende Biegeradien und Biegeformen angeht, beliebig verändert werden kann. Die Zylinder sind weggesteuert. Vorzugsweise können präzise weggesteuerte Hydraulikzylinder verwendet werden, wie sie in anderen Bereichen des Maschinenbaus eingesetzt werden und als Standardteile hoher Präzision verfügbar sind. Die Koordinierung der Wegsteuerung der Zylinder 14, 17 und 18 erfolgt in bekannter Weise durch einen Mikrorechner. Durch die Überlagerung von Rotation und Translation bei der Bewegung der Rollen wird erreicht, daß die Biegerollen sehr genau auf der gewünschten Biegekontur abrollen. Dabei tritt praktisch keine Relativbewegung zwischen Glasscheibe und Mantel der Biegerollen in deren Achsrichtung auf. Durch die erfindungsgemäße Technik des Biegens durch Abrollen findet die Biegung der Scheibe von innen nach außen statt, wobei das Biegemoment stets nur dort und so lange auf die Scheibe einwirkt, wie der Biegevorgang abläuft.

Um die Biegeform genau zu definieren, kann ein Formkörper 21 verwendet werden. Dieser Formköper 21 wird vorteilhaft von Rädern 22 und/oder Rollen 23 gebildet, die in ihrem Berührpunkt bzw. in ihrer Berührlinie auf der konkaven Seite der gebogenen Scheibe genau auf der gewünschten Biegeform liegen. Rollen werden vorzugsweise dann verwendet, wenn die Biegeform gerade Bereiche enthält, bei denen es, wie zum Beispiel bei Verglasungen für Verkaufstheken, auf gute Planität und gute Optik ankommt. Die Scheibe wird während des Biegevorganges von den Formrollen gegen den Formkörper gedrückt, wodurch eine Biegekraft auf die Scheibe ausgeübt wird. Daher kann, wie beim Glasbiegen mit einer Biegepresse, die Temperatur der zu biegenden Glasscheibe niedriger gewählt werden als beim Biegen nur durch Schwerkraft, was der Optik der Scheibe zu Gute kommt.

Der Formkörper 21, dessen Länge mindestens dem Bereich der Biegevorrichtung entspricht, in welchem der Biegevorgang abläuft, kann mit Hilfe von Positionshilfen, wie zum Beispiel Anschlagschienen 24 in der Biegeeinrichtung positioniert werden. Vorteilhaft ist das Einbringen des Formkörpers 21 von oben zum Beispiel mittels eines über der Biegevorrichtung angebrachten, querverfahrbaren Laufkranes. Nach Einbringen des Formkörpers wird dieser mittels einer Schnellspannvorrichtung in der Biegevorrichtung, zum Beispiel Klemmschrauben 25 fixiert. Bei der beschriebenen Ausführung des Formkörpers 21 kann dieser ohne langwierige Stillstandzeit der Biegevorrichtung außerhalb der Vorrichtung genau justiert werden. Es ist auch möglich, mehrere Formkörper bereit zu halten, die unterschiedlichen, häufig zu produzierenden Biegeformen entsprechen. Mit entsprechend höherem Aufwand, was Stelleinrichtungen und Steuerungstechnik angeht, ist es auch möglich den Formkörper automatisch zu verstellen, wodurch sich das Wechseln des Formkörpers 21 erübrigt.

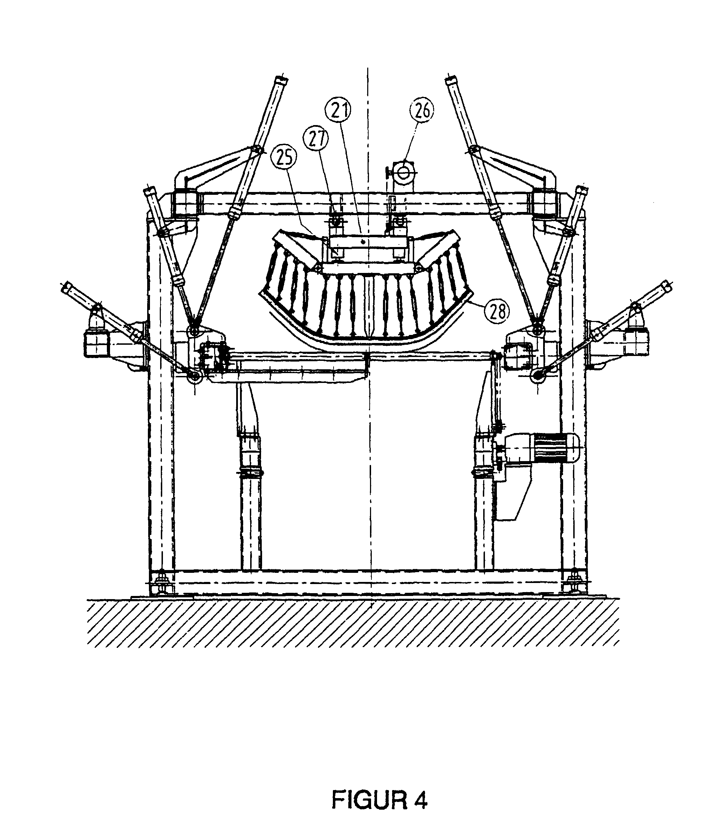

Bei einer für besondere Anforderungen, wie z.B. sehr empfindliche Oberflächen der konkaven Seite der zu biegenden Glasscheibe, wird der Formkörper 21 mit der Transportgeschwindigkeit der Scheibe in der Biegevorrichtung mitbewegt (Fig. 4). Hierzu ist der Formkörper 21 mit Laufrollen versehen, welche in Schienen, die im oberen Teil der Biegevorrichtung angebracht sind, geführt werden. Der Antrieb erfolgt z.B. durch einen elektrisch betriebenen Kettentrieb 26, der mit dem Antrieb der Rollen 2 und 6 synchronisiert ist, so daß die Verfahrgeschwindigkeit des Formkörpers 21 genau der Umfangsgeschwindigkeit der vorgenannten Rollen entspricht. Es ist zweckmäßig, den Formkörper 21 zunächst auf diese Geschwindigkeit zu beschleunigen und anschließend mittels Stellelementen, im dargestellten Fall pneumatisch betriebene Kurzhubzylinder 25, auf die Scheibe abzusenken. In ähnlicher Weise wird am Ende des Biegevorganges der Formkörper 21 zunächst von der der fertig gebogenen Scheibe abgehoben, anschließend mit dem Antrieb 26 verzögert und durch Umkehr der Bewegungsrichtung wieder in die Ausgangsposition gebracht. Die Bewegung des Formkörpers wird abhängig von der Position der zu biegenden Glasscheibe in der Vorrichtung derart eingeleitet, daß die zu biegende Glasscheibe mit ihrer gesamten Länge während des Biegevorganges vom Formkörper überdeckt wird. Die Erfassung der Position der Scheibe erfolgt in üblicher und bekannter Weise mittels Lichtschranken oder anderer geeigneter Näherungssensoren.

Die Gesamtlänge der Biegevorrichtung ist auf die maximale Länge der zu biegenden Glasscheibe abgestimmt. Dies bedeutet, daß zur Länge der gebogenen Scheibe noch die Länge hinzu kommt, welche die Scheibe auf den Biegerollen während des Biegevorganges zurücklegt. Typisch ist für eine Scheibe von zum Beispiel 2m Länge eine Länge der Biegevorrichtung von etwa 3m.

Hinter der Biegeeinrichtung wird zur Herstellung von Einscheibensicherheitsglas eine Luftkühlstrecke angeordnet, welche die zur Erzeugung der gewünschten Vorspannung erforderliche rasche Abkühlung der Scheibe bewirkt. Diese sogenannte Luftvorspannstrecke ist zweckmäßigerweise mit entsprechend der Biegeform einstellbaren Förderrollen und Vorspanndüsen ausgestattet.

## Patentansprüche

1. Biegevorrichtung für auf Erweichungstemperatur erwärmte Glasscheiben (1) mit einem festen Rollenherd aus geraden Rollen (2) zur Förderung der Glasscheibe in den Biegebereich, mit geraden, bis in die Mitte des festen Rollenherdes reichenden Biegerollen (6), die an beiden Seiten neben dem festen Rollenherd mit geraden Rollen verlagert sind und die sich in Ausgangsstellung zwischen diesen geraden Rollen befinden, **dadurch gekennzeichnet**, daß die Biegerollen so angebracht und bewegbar sind, daß sie die Biegeform erzeugen, indem sie, im Querschnitt der zu biegenden Scheibe betrachtet, auf der Biegeform abrollen.

2. Vorrichtung nach Anspruch 1, **dadurch gekennzeichnet**, daß der Abrollvorgang dadurch erzeugt wird, daß an mindestens zwei Gelenkpunkten (12) und (13), welche den Lagerbalken (7) der Biegerollen (6) tragen, insgesamt mindestens drei lineare Verstellelemente (14), (17) und (18) angreifen, die ihrerseits um auf der jeweiligen Verstellachse positionierte Lagerpunkte (15), (19) und (20) drehbar sind.

3. Vorrichtung nach Anspruch 2, **dadurch gekennzeichnet**, daß die linearen Verstellelemente (14), (17) und (18) weggesteuerte Hydraulikzylinder sind.

4. Vorrichtung nach einem oder mehreren der Ansprüche 1 bis 3, **dadurch gekennzeichnet**, daß oberhalb des geraden Rollenherdes ein von Rollen (23) und/oder Rädern (22) gebildeter Formkörper (21) angeordnet ist, gegen welchen die zu biegende Scheibe (1) bei der die Biegung bewirkenden Abrollbewegung der Biegerollen (6) zur Anlage gebracht wird.

5. Vorrichtung nach Anspruch 4, **dadurch gekennzeichnet**, daß der Formkörper (21) durch Räder (22) gebildet wird, welche im Querschnitt der gebogenen Scheiben (1) betrachtet, die Biegeform in ihren Berührpunkten auf der konkaven Scheibenseite wie Stützpunkte eines Polygonszuges definieren.

6. Vorrichtung nach Anspruch 4 oder 5, **dadurch gekennzeichnet**, daß nicht gewölbte, gerade Bereiche der Biegeform im Formkörper (21) durch zylindrische Rollen (23) gebildet werden, deren Länge der Länge des betreffenden geraden Anteils der Biegekontur entspricht.

7. Vorrichtung nach einem oder mehreren der Ansprüche 4 bis 6, **dadurch gekennzeichnet**, daß der Formkörper (21) an seiner Oberseite mit einer Schnellwechselbefestigung (25) am Gestell der Biegevorrichtung befestigt ist.

8. Vorrichtung nach einem oder mehreren der Ansprüche 4 bis 7, **dadurch gekennzeichnet**, daß die Länge des Formkörpers (21) gleich der maximale Scheibenlänge plus der Strecke ist, welche die Scheibe beim Biegevorgang zurücklegt.

9. Vorrichtung nach einem oder mehreren der Ansprüche 1 bis 4, **dadurch gekennzeichnet**, daß der Formkörper (21) in einer Führungseinrichtung (27) parallel zur Transportbewegung der Scheibe (1) während des Biegevorganges geführt und mit gleicher Geschwindigkeit wie die zu biegende Scheibe in deren Transportrichtung mitbewegt wird, wobei der bereits in Bewegung begriffene Formkörper zu Beginn des Biegevorganges auf die Scheibe abgesenkt und nach Beendigung des Biegevorganges von der Scheibe abgehoben und erst nach Beendigung des Abhebevorganges wieder in die Ausgangsposition zurückgefahren wird.

10. Vorrichtung nach Anspruch 9, **dadurch gekennzeichnet**, daß das die Glasscheibe (1) berührende Teil (28) des mitbewegten Formkörpers (21) ähnlich wie der konvexe Teil der Biegeform einer Biegepresse für eine Biegeeinrichtung zum Biegen hängender Glasscheiben ausgeführt ist.

11. Vorrichtung nach einem der beiden Ansprüche 9 oder 10, **dadurch gekennzeichnet**, daß der Antrieb des Formkörpers in Transportrichtung der zu biegenden Scheibe (1) mittels eines elektrisch betriebenen Linearantriebs erfolgt, welcher elektronisch mit der Transportbewegung der geraden Rollen (2) sowie der Biegerollen (6) synchronisiert ist.

12. Vorrichtung nach einem oder mehreren der Ansprüche 1 bis 11, **dadurch gekennzeichnet**, daß in Transportrichtung hinter der Biegevorrichtung eine Vorspannstrecke zum thermischen Vorspannen der gebogenen Glasscheiben (1) angeordnet ist, deren Transportrollen und deren Vorspanndüsenfeld entsprechend der Biegeform einstellbar sind.

## Claims

1. Folding device for glass sheets (1) heated to softening temperature comprising a stationary roller furnace consisting of straight rollers (2) for conveying said glass sheet into the folding region, said device comprising straight folding rollers (6) which extend into the center of the stationary roller furnace, and which are offset at both sides beside said stationary roller furnace with straight rollers, and which in initial position are located between said straight rollers, characterized in that said folding rollers (6) are mounted and moveable such that they produce the folding form by rolling on the folding form, as observed in cross section of the sheet to be folded.

2. The device as set forth in claim 1, characterized in that said rolling action is caused such that altogether at least three linear adjusting elements (14), (17) and (18) are engaging at least two hinge points (12) and (13), carrying the support beam (7) of said folding rollers (6), said linear adjusting elements, for their part, being rotatable around the bearing points (15), (19) and (20) positioned on the respective adjusting axis.

3. The device as set forth in claim 2, characterized in that said linear adjusting elements (14), (17), and (18) are displacement-controlled hydraulic cylinders.

4. The device as set forth in one or more of the claims 1 to 3, characterized in that a form body (21), formed by one of rollers (23) and/or wheels (22), is arranged above the straight roller furnace, the sheet (1) to be folded being abutted against said form body during the rolling movement of the folding rollers (6) bringing about folding.

5. The device as set forth in claim 4, characterized in that said form body (21) is formed by wheels (22) which, viewed in cross section of the folding sheet (1), define the folding form in their contact points on the concave side of the sheet like supporting points of a polygonal.

6. The device as set forth in claim 4 or 5, characterized in that uncurved, straight regions of the folding form in the form body (21) are formed by cylindrical rollers (23), the length of said regions corresponding to the length of the straight portion of the folding contour concerned.

7. The device as set forth in one or more of the claims 4 to 6, characterized in that said form body (21) is secured at its upper surface to the mount of the folding device with a quick change fixing device (25).

8. The device as set forth in one or more of the claims 4 to 7, characterized in that the length of said form body (21) is equal to the maximal sheet length plus the distance the sheet travels during the folding process.

9. The device as set forth in one of more of the claims 1 to 4, characterized in that, during the folding process, said form body (21) is fed into a guiding device (27) parallel to the transport movement of said sheet (1) and is moved along at the same speed as the sheet to be folded in its direction of transport, wherein said form body, already set in motion, is lowered onto the sheet at the beginning of the folding process and at the end of the folding process is lifted off, and only returns to the initial position upon conclusion of said lifting-off action.

10. The device as set forth in claim 9, characterized in that the portion (28) of the moved-along form body (21) contacting the glass sheet (1) is configured similar to the convex portion of the folding form of a folding press for a folding device used for folding hanging glass sheets.

11. The device as set forth in either of the claims 9 or 10, characterized in that the movement of the form body in transport direction of the sheet (1) to be folded occurs by means of an electrically driven linear driving mechanism which is electronically synchronized with the transport movement of the straight rollers (2) and of the folding rollers (6).

12. The device as set forth in one or more of the claims 1 to 11, characterized in that a tempering track for thermal tempering of the folding glass sheet (1) is arranged in transport direction behind the folding device, the transport rollers and the tempering nozzle field of said tempering track being adjustable in accordance with the folding form.

## Revendications

1. Dispositif de cintrage de vitres (1) chauffées à la température de ramollissement, avec un four à rouleaux fixe constitué de rouleaux droits (2) pour amener la vitre dans la zone de cintrage, avec des rouleaux de cintrage droits (6), lesquels s'étendent jusqu'au milieu du four à rouleaux fixe, sont montés sur des paliers à leurs deux extrémités à côté du four à rouleaux fixe à rouleaux droits et, en position initiale, se trouvent entre ces rouleaux droits, caractérisé en ce que les rouleaux de cintrage sont montés et mobiles de façon à générer la forme de cintrage en roulant sur celle-ci, la vitre à cintrer étant vue en coupe transversale.

2. Dispositif selon la revendication 1, caractérisé en ce que le processus de roulage est réalisé par le fait que, en au moins deux points d'articulation (12) et (13) qui portent la poutre formant palier (7) des rouleaux de cintrage (6), agissent au total au moins trois éléments de déplacement linéaire (14), (17) et (18) qui, pour leur part, peuvent tourner autour de points d'appui (15), (19) et (20) positionnés sur chaque axe de déplacement.

3. Dispositif selon la revendication 2, caractérisé en ce que les éléments de déplacement linéaire (14), (17) et (18) sont des vérins hydrauliques à course commandée.

4. Dispositif selon une ou plusieurs des revendications 1 à 3, caractérisé en ce qu'au-dessus du four à rouleaux droits est disposé un corps de formage (21) qui est formé de rouleaux (23) et/ou de molettes (22) et contre lequel la vitre (1) à cintrer est appliquée lors du mouvement de roulage des rouleaux de cintrage (6) provoquant le cintrage.

5. Dispositif selon la revendication 4, caractérisé en ce que le corps de formage (21) est formé par des molettes (22) qui, la vitre (1) à cintrer étant vue en coupe transversale, définissent, au niveau de leurs points de contact avec la face concave de la vitre, la forme de cintrage comme des points d'appui d'un tracé polygonal.

6. Dispositif selon la revendication 4 ou 5, caractérisé en ce que les zones rectilignes, non bombées de la forme de cintrage sont formées, dans le corps de formage (21), par des rouleaux cylindriques (23) dont la longueur correspond à celle de la portion rectiligne concernée du contour de cintrage.

7. Dispositif selon une ou plusieurs des revendications 4 à 6, caractérisé en ce qu'au niveau de sa partie supérieure, le corps de formage (21) est fixé au bâti du dispositif de cintrage par un moyen de fixation à serrage rapide (25).

8. Dispositif selon une ou plusieurs des revendications 4 à 7, caractérisé en ce que la longueur du corps de formage (21) est égale à la longueur maximale de la vitre, augmentée du trajet parcouru par la vitre lors de l'opération de cintrage.

9. Dispositif selon une ou plusieurs des revendications 1 à 4, caractérisé en ce que, durant l'opération de cintrage, le corps de formage (21) est guidé dans un dispositif de guidage (27) parallèlement au mouvement de transport de la vitre (1) et est entraîné à la même vitesse que la vitre à cintrer dans la direction de transport de celle-ci, le corps de formage déjà en mouvement étant descendu sur la vitre au début de l'opération de cintrage, étant décollé de celle-ci au terme de l'opération de cintrage et n'étant ramené en position initiale qu'au terme de l'opération de décollement.

10. Dispositif selon la revendication 9, caractérisé en ce que la partie (28), en contact avec la vitre (1), du corps de formage entraîné (21) présente une configuration identique à la partie convexe de la forme de cintrage d'une presse à cintrer destinée à un dispositif de cintrage pour cintrer des vitres suspendues.

11. Dispositif selon l'une des deux revendications 9 ou 10, caractérisé en ce que l'entraînement du corps de formage dans la direction de transport de la vitre (1) à cintrer s'effectue à l'aide d'un moyen d'entraînement linéaire à commande électrique, lequel est synchronisé électroniquement avec le mouvement de transport des rouleaux droits (2) et avec celui des rouleaux de cintrage (6).

12. Dispositif selon une ou plusieurs des revendications 1 à 11, caractérisé en ce que, derrière le dispositif de cintrage par rapport à la direction de transport, est prévue, pour la précontrainte thermique des vitres cintrées (1), une portion de précontrainte, dont les rouleaux de transport et le secteur à buses de précontrainte sont réglables en fonction de la forme de cintrage.
